(19) Europäisches Patentamt
European Patent Office
Office européen des brevets

(11) **EP 2 579 063 B1**

(12) **FASCICULE DE BREVET EUROPEEN**

(45) Date de publication et mention
de la délivrance du brevet:
**03.12.2014 Bulletin 2014/49**

(51) Int Cl.:
***G01S 19/21*** *(2010.01)*

(21) Numéro de dépôt: **12187062.0**

(22) Date de dépôt: **03.10.2012**

(54) **Procédé et système de localisation d'interferences par sous-bande fréquentielle**

Verfahren und System zur Lokalisierung von Interferenzen durch Frequenz-Subbasisband

Method and system for locating interference by frequency sub-band

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.10.2011 FR 1103058**

(43) Date de publication de la demande:
**10.04.2013 Bulletin 2013/15**

(73) Titulaire: **Thales**
**92200 Neuilly Sur Seine (FR)**

(72) Inventeurs:
- **MARTIN, Nicolas**
  **26500 BOURG LES VALENCE (FR)**
- **LETESTU, Franck**
  **26300 BOURG-DE-PEAGE (FR)**
- **MONTAGNE, Bruno**
  **26240 SAINT-BARTHELEMY DE VALS (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
- **EDALATZADEH M R ET AL: "A new eigenspace subband beamformer for cancellation of broadband interferences using Subband Adaptive Filtering", TELECOMMUNICATIONS, 2008. IST 2008. INTERNATIONAL SYMPOSIUM ON, IEEE, PISCATAWAY, NJ, USA, 27 août 2008 (2008-08-27), pages 284-289, XP031348844, ISBN: 978-1-4244-2750-5**
- **FRANCOIS LE CHEVALIER ET AL: "STAP developments in Thales", RADAR CONFERENCE, 2009. EURAD 2009. EUROPEAN, IEEE, PISCATAWAY, NJ, USA, 30 septembre 2009 (2009-09-30), pages 53-56, XP031558458, ISBN: 978-1-4244-4747-3**
- **ANDREW BROWN ET AL: "Locating the Jammer using A/J Software Receiver", PROCEEDINGS OF ION GNSS 2004, 24 septembre 2004 (2004-09-24), pages 110-121, XP055017928, Long Beach, CA, USA**

EP 2 579 063 B1

**Description**

La présente invention concerne le domaine de la localisation de sources interférant sur un signal reçu par un récepteur comprenant une pluralité d'antennes réceptrices ou réseau d'antennes, par exemple un récepteur de radio-navigation par satellite ou un récepteur de communications numérique.

L'invention a pour objet un procédé et un système de détection et de localisation de sources interférentes par estimation de leur direction d'arrivée. Elle s'applique avantageusement aux récepteurs implémentant un traitement anti-interférences spatio-temporel de type STAP (Space Time Adaptive Processing).

Les systèmes de réception de signaux, par exemple les récepteurs de radionavigation par satellite ou de communication peuvent être perturbés par des sources interférentes, intentionnelles ou non, par exemple des sources émettant un signal sur une fréquence proche de celle du signal reçu ou présentant des harmoniques autour de la fréquence de ce signal.

En conséquence, se pose le problème de la localisation de ces sources interférentes afin de pouvoir en déduire des solutions permettant d'améliorer les traitements permettant la suppression des effets indésirables de ces interférences sur le récepteur. En particulier, la localisation de sources interférentes porte sur la détermination du nombre de sources, de leurs directions d'arrivée et de leur localisation fréquentielle dans la bande utile du récepteur.

On connait l'algorithme MUSIC, de l'anglais « Multiple Signal Classification » connu pour localiser des émetteurs par détection des interférences émises. Cette méthode est basée sur la détermination des valeurs et vecteurs propres de la matrice d'intercorrélation du signal reçu par les différentes antennes du récepteur et fonctionne ainsi dans le domaine spatial. Sa mise en oeuvre est complexe pour des processeurs à ressources limitées du fait de la décomposition en vecteurs propres de cette matrice. En outre cette méthode présente des résultats peu fiables pour discriminer plusieurs sources interférentes impactant le même signal.

On connait également le document « EDALATZADEH M R ET AL: "A new eigenspace subband beamformer for cancellation of broadband interferences using Subband Adaptive Filtering", TELECOMMUNICATIONS, 2008. IST 2008. INTERNATIONAL SYMPOSIUM ON, IEEE, PISCATAWAY, NJ, USA, 27 aout 2008, pages 284-289, XP031348844, ISBN: 978-1 -4244-2750-5 » qui décrit une méthode applicable à la suppression d'interférences impactant des réseaux antennaires, cependant ce document ne propose pas de solution de localisation de sources interférentes comportant notamment la détermination du nombre de sources et de leur direction d'arrivée.

L'invention propose une méthode alternative à celles connues, dont la complexité de mise en oeuvre est diminuée et qui permette d'exploiter une matrice d'intercorrélation dans le domaine spatial mais aussi dans le domaine temporel pour améliorer la précision des estimations, notamment lorsque plusieurs sources interférentes existent et permettre la caractérisation fréquentielle des sources interférentes.

L'invention a notamment pour objet un procédé de localisation de sources interférant sur un signal reçu par un récepteur comportant un réseau d'antennes comprenant les étapes suivantes :

- une étape de calcul de la matrice d'intercorrélation spatio-temporelle $R_{xx}$ des signaux reçus par les antennes élémentaires dudit réseau,
- une étape de subdivision de la bande utile desdits signaux en sous-bandes (b) et de génération d'un filtre H(b) passe-bande associé à chaque sous-bande (b),
- pour chaque sous-bande (b),

  - une étape de calcul de la matrice d'intercorrélation spatiale R(b) associée à la sous-bande (b) par application dudit filtre H(b) à la matrice d'intercorrélation spatio-temporelle $R_{xx}$,
  - une étape de calcul d'au moins une valeur propre $\{\lambda_1, \lambda_2,... \lambda_M\}$ de ladite matrice d'intercorrélation spatiale R(b),
  - une étape de détection d'interférences, une source interférente étant détectée lorsqu'une valeur propre $\lambda_k$, vérifie le critère de détection suivant : $\log((\sum_{m=k}^{M} \lambda_m)/(M-k+1)) - \log(\prod_{m=k}^{M} \lambda_m)/(M-k+1)) > seuil$, où M est le nombre d'antennes dudit réseau, k est l'indice, variant de 1 à M, des valeurs propres dans l'ordre décroissant et *seuil* est un seuil de détection prédéterminé strictement positif,
  - une étape de détermination de l'ensemble des vecteurs propres $\{U_1, U_2,... U_N\}$ correspondant aux valeurs propres $\{A_1, \lambda_2,... \lambda_N\}$ associées à une source interférente détectée, ledit ensemble constituant une base du sous-espace des interférences,
  - une étape de détermination des directions d'arrivée des sources interférentes par recherche des vecteurs de gains relatifs appartenant audit sous-espace des interférences ou qui sont orthogonaux au sous-espace du bruit orthogonal et complémentaire au sous-espace des interférences.

Dans une variante de réalisation de l'invention, l'étape de subdivision de la bande utile est réalisée par dichotomie, une sous-bande étant subdivisée si au moins une source interférente est détectée dans cette sous-bande.

Dans une variante de réalisation de l'invention, la matrice d'intercorrélation spatio-temporelle $R_{xx}$ est calculée par blocs à partir des matrices d'intercorrélation spatiales $R_l$ du signal multi-capteurs reçu avec le signal multi-capteurs reçu et retardé d'un nombre d'échantillons égal à I-1.

Dans une variante de réalisation de l'invention, la matrice d'intercorrélation spatio-temporelle $R_{xx}$ est calculée à l'aide d'un réseau systolique.

Dans une variante de réalisation de l'invention, lesdits filtres H(b) sont générés à partir de gabarits fréquentiels qui ne présentent pas de recouvrement entre eux et de sorte que l'ensemble des gabarits occupe toute la bande utile du signal.

Dans une variante de réalisation de l'invention, les valeurs propres $\{\lambda_1, \lambda_2,... \lambda_N\}$ sont calculées à partir des coefficients du polynôme caractéristique P(X) de la matrice d'intercorrélation spatiale R(b) et de ses divisions polynômiales successives par (X- $\lambda_k$).

Dans une variante de réalisation de l'invention, lesdites valeurs propres sont calculées par application de la méthode de Newton itérative auxdits polynôme et divisions polynômiales.

Dans une variante de réalisation de l'invention, ledit critère de détection est calculé à partir du premier et de l'avant-dernier coefficient desdits polynôme et divisions polynômiales.

Dans une variante de réalisation de l'invention, les vecteurs propres sont calculés par la méthode du pivot de Gauss ou par une décomposition de Cholesky.

Dans une variante de réalisation de l'invention, le sous-ensemble des interférences est défini par sa matrice de projection $P_{interférences} = [U_1 ... U_k]. [U_1 ... U_k]^{T*}$, le sous-ensemble du bruit est défini par sa matrice de projection $P_{bruit}$ égale à la différence entre la matrice identité et la matrice de projection du sous-ensemble des interférences et l'étape de détermination des directions d'arrivée des sources interférentes est réalisée par résolution de l'équation $P_{bruit}.\vec{G}(\sigma, \alpha) = \vec{0}$ où $\vec{G}(\sigma, \alpha)$ est le vecteur des gains relatifs du réseau d'antenne dans la direction définie par l'angle $\sigma$ de site et l'angle $\alpha$ d'azimut.

Dans une variante de réalisation de l'invention, la résolution de l'équation $P_{bruit}.\vec{G}(\sigma, \alpha) = \vec{0}$ est effectuée par recherche des valeurs de $(\alpha,\sigma)$ qui minimisent la fonction $\Phi(\sigma,\alpha) = \|P_{bruit}.\vec{G}(\sigma,\alpha)\|^2$, où $\|\|$ est l'opérateur module.

Dans une variante de réalisation de l'invention, la recherche des minima de la fonction $\Phi(\sigma, \alpha)$ est réalisée par application de la méthode de Newton bidimensionnelle.

L'invention a également pour objet un récepteur comportant au moins un réseau d'antennes destiné à recevoir un signal caractérisé en ce qu'il comporte des moyens adaptés à mettre en oeuvre le procédé de localisation de sources interférentes selon l'invention.

Dans une variante de réalisation de l'invention, le récepteur comporte en outre un module de traitement anti-interférences adapté à supprimer les interférences impactant ledit signal et à calculer ladite matrice d'intercorrélation spatio-temporelle $R_{xx}$.

Dans une variante de réalisation de l'invention, ledit signal est un signal de radio-navigation ou un signal de télécommunication.

D'autres caractéristiques et avantages de l'invention apparaîtront à l'aide de la description qui suit faite en regard de dessins annexés qui représentent :

- les figures 1a et 1b, deux synoptiques schématisant la détermination de la matrice d'intercorrélation spatio-temporelle du signal reçu par un réseau d'antenne que comporte un récepteur selon l'invention,
- la figure 2, un diagramme représentant l'allure possible d'un gabarit d'un filtre de sous-bande et la réponse impulsionnelle de ce filtre,
- la figure 3, une illustration de la méthode de Newton itérative pour déterminer les valeurs propres d'une matrice d'intercorrélation spatiale,
- la figure 4, un schéma de la direction d'arrivée d'une onde interférente dans un repère fixe par rapport au réseau de capteurs que comporte le récepteur selon l'invention,
- la figure 5, un synoptique d'un exemple de récepteur adapté à mettre en oeuvre le procédé selon l'invention.

Le procédé selon l'invention vise à déterminer le nombre de sources interférentes impactant un signal reçu par un réseau d'antennes ou de capteurs ainsi que leurs directions d'arrivée et leur localisation spectrale.

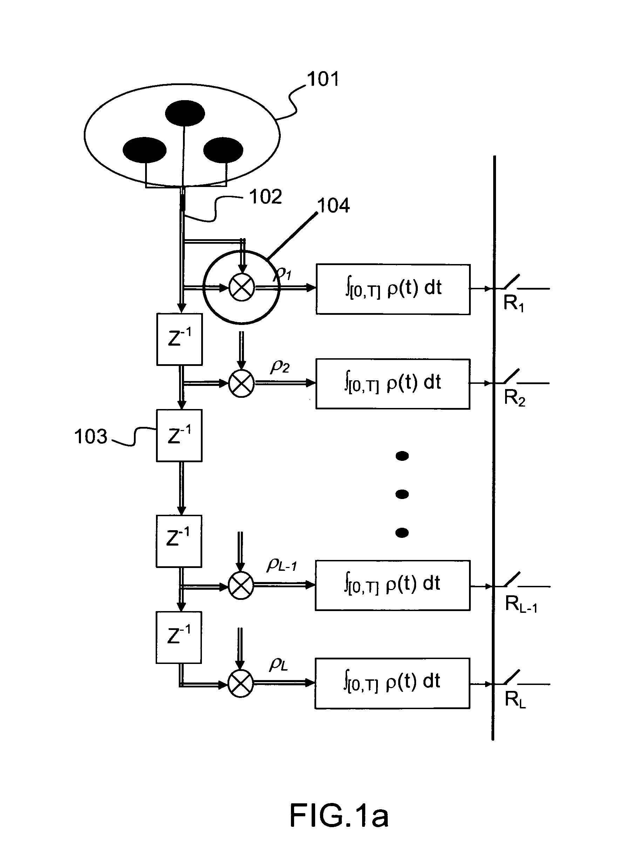

A cet effet, la première étape du procédé consiste à déterminer la matrice d'intercorrélation spatio-temporelle du signal reçu. La figure 1a schématise les traitements mis en oeuvre par un récepteur adapté pour calculer cette matrice.

Chaque capteur d'un réseau d'antennes 101 délivre un signal reçu. Le signal multi-capteur 102 échantillonné est produit en entrée d'une ligne à retard 103 composée d'un nombre L de retards. Un opérateur de corrélation spatiale 104 est appliqué entre le signal multi-capteur 102 et sa version retardée pour produire un nombre L de matrices d'intercorrélations $\rho_l$ instantanées. Chaque matrice $\rho_l$ est ensuite intégrée sur une durée T donnée pour produire une matrice

d'intercorrélation $R_l$ sous-échantillonnée à un rythme plus faible, de sorte à limiter l'influence du bruit et à diminuer le rythme des traitements mis en oeuvre dans la suite du procédé.

Avantageusement, les matrices instantanées $\rho_l$ sont déterminées à une fréquence de traitement élevée de l'ordre de la dizaine de MegaHertz. Leur calcul peut par conséquent être implémenté sur un circuit intégré. Les matrices $R_i$ sous-échantillonnées et les traitements successifs effectués sur ces matrices sont compatibles de processeurs fonctionnant à un rythme moins rapide et peuvent ainsi être réalisés par des moyens logiciels.

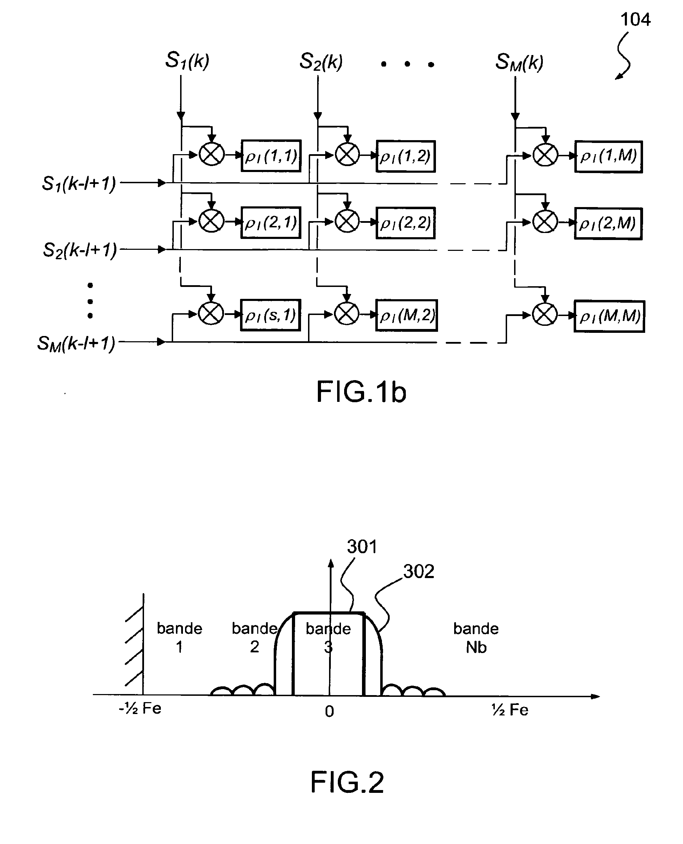

La figure 1b schématise plus en détail, l'opérateur de corrélation spatiale 104 qui réalise une corrélation entre les échantillons $S_1(k)$, $S_2(k)$,...$S_M(k)$ des signaux reçus, à un même instant discret k, par les M capteurs du réseau d'antennes et les échantillons $S_1(k-l+1)$, $S_2(k-l+1)$,...,$S_M(k-l+1)$ retardés d'un nombre I d'échantillons.

Les matrices $R_l$ obtenues in fine sont les matrices d'intercorrélation spatiales entre les sorties des M capteurs non retardées et les sorties des M capteurs retardées d'un nombre (I-1) d'échantillons et sont de dimensions (M, M).

Un nombre M de capteurs compris entre 4 et 7 permet d'assurer des performances de localisation suffisantes tout en limitant l'encombrement du réseau d'antennes sur le récepteur. Le nombre de retards L est limité par la capacité de calcul des processeurs exécutant le procédé selon l'invention.

A partir des matrices d'intercorrélation spatiales $R_l$, la matrice d'intercorrélation spatio-temporelle $R_{xx}$ est déterminée à l'aide de la relation suivante :

$$
R_{xx} = \begin{bmatrix}
[R_1] & .. & [R_{l-1}^{*T}] & [R_l^{*T}] & [R_{l+1}^{*T}] & .. & [R_L^{*T}] \\
\vdots & & \vdots & \vdots & \vdots & & \vdots \\
[R_{l-1}] & .. & [R_1] & [R_2^{*T}] & [R_3^{*T}] & .. & [R_{L-l}^{*T}] \\
[R_l] & .. & [R_2] & [R_1] & [R_2^{*T}] & .. & [R_{L-l+1}^{*T}] \\
[R_{l+1}] & .. & [R_3] & [R_2] & [R_1] & .. & [R_{L-l+2}^{*T}] \\
\vdots & & \vdots & \vdots & \vdots & & \vdots \\
[R_L] & .. & [R_{L-l}] & [R_{L-l+1}] & [R_{L-l+2}] & .. & [R_1]
\end{bmatrix}_{L.M \times L.M}
$$

La matrice d'intercorrélation spatio-temporelle $R_{xx}$ est de dimensions (L.M, L.M). C'est une matrice de Toeplitz par blocs, c'est-à-dire que ses coefficients matriciels sont identiques sur chaque diagonale, et c'est une matrice symétrique, au sens hermitien : $R_{xx}^T = R_{xx}^*$.

La sous-matrice d'intercorrélation spatiale $R_1$ est également symétrique au sens hermitien $R_1^T = R_1^*$. En utilisant la méthode décrite ci-dessus, la matrice $R_{xx}$ est déterminée en un nombre de calculs proportionnel à $M^2xL$. En effet, le calcul des sous-matrices $R_l$ pour I variant de 1 à L suffit pour calculer tous les coefficients de la matrice $R_{xx}$.

D'autres méthodes sont également envisageables, tel que l'utilisation d'un réseau systolique qui produit la matrice V triangulaire, racine carrée de la matrice $R_{xx}$ qui est égale au produit de V et de son complexe conjugué $V^{T*}$. Le nombre de calculs mis en oeuvre par cette méthode est cependant plus important, proportionnel à $M^2xL^2$.

De façon générale, toute méthode permettant de déterminer la matrice d'intercorrélation spatio-temporelle $R_{xx}$ à partir des signaux reçus par les M capteurs que comporte le récepteur reste compatible de l'invention.

Dans le cas où le récepteur selon l'invention implémente, par ailleurs, un traitement anti-interférences spatio-temporel STAP, la matrice d'intercorrélation spatio-temporelle $R_{xx}$ est déjà calculée dans le cadre de ce traitement et peut être avantageusement réutilisée. Cette particularité sera rappelée plus en avant de la description.

Une solution possible à ce stade est d'appliquer la méthode connue MUSIC directement à la matrice d'intercorrélation spatio-temporelle $R_{xx}$. Cependant, cette façon de faire présente plusieurs inconvénients. La décomposition en valeurs propres et vecteurs propres de cette matrice de dimensions (L.M, L.M), préalable à la résolution du problème, est complexe du fait de la taille importante de la matrice. D'autre part, comme évoqué précédemment, l'application directe de la méthode MUSIC à la matrice spatio-temporelle $R_{xx}$ présente des performances amoindries lorsque plusieurs sources interférentes émettent simultanément dans la bande de fréquence utile du récepteur.

Pour supprimer ces limitations, l'invention consiste notamment à séparer la bande utile du signal en une ou plusieurs sous-bandes et à se ramener à un problème purement spatial en calculant une matrice d'intercorrélation spatiale, de dimensions réduites (M,M), associée à chaque sous-bande.

Pour cela, un filtre passe-bande H(b) est conçu, pour chaque sous-bande b, de sorte à calculer la matrice d'intercorrélation spatiale R(b) associée à la sous-bande b, à partir de la matrice d'intercorrélation spatio-temporelle $R_{xx}$ à l'aide de la relation suivante :

$$R(b) = H(b)^{T^*}.R_{xx}.H(b) \,,$$

où $^{T^*}$ est l'opérateur transposé conjugué.

Le filtre H(b) est un filtre matriciel de dimensions (L.M, M) qui s'exprime sous la forme suivante :

$$H(b) = \begin{bmatrix} h_1(b).\,Id \\ \vdots \\ \vdots \\ h_l(b).\,Id \\ \vdots \\ \vdots \\ h_L(b).\,Id \end{bmatrix}_{L.M\,xM}$$

avec $I_d$ la matrice identité de dimensions (M,M) et $h_l(b)$, pour l variant de 1 à L, un filtre vectoriel à M coefficients.

La matrice R(b) est hermitienne. Dans le cas où un réseau systolique est utilisé pour calculer la matrice $R_{xx}$, le calcul de R(b) peut être réalisé à l'aide de la relation suivante :

$$R(b) = H(b)^{T^*}.V.V^{T^*}.H(b) = (H(b)^{T^*}.V).(H(b)^{T^*}.V)^{T^*}$$

Les coefficients de chaque filtre vectoriel $h_l(b)$ peuvent être calculés en réalisant la transformée inverse d'un gabarit de filtre prédéterminé, et appliquer ensuite un fenêtrage pour réduire les effets du nombre de coefficients matriciels du filtre R(b) limité à L. A cet effet, la relation suivante peut être utilisée :

$$h_l(b) = [\int_{[-\frac{F_e}{2},\frac{F_e}{2}]} \exp(-j2\pi\frac{f}{F_e}(l-\frac{L}{2})).gabarit_b(f).df].Fen\hat{e}tre(l-L/2) \tag{1}$$

avec $F_e$ la fréquence d'échantillonnage du signal, $gabarit_b(f)$ le gabarit fréquentiel choisi pour le filtre et Fenêtre(l) correspond à une fonction de fenêtrage.

La figure 2 représente, sur un diagramme, l'allure possible du gabarit 301 d'un filtre pour une sous-bande comparé à la réponse 302 fréquentielle du filtre $h_l(b)$ déterminé finalement à l'aide de la relation (1). La différence entre le gabarit 301 et la réponse 302 du filtre provient du nombre limité de coefficients du filtre réalisé en numérique. L'utilisation d'un fenêtrage permet de limiter les oscillations.

Lorsque plusieurs sous-bandes sont sélectionnées, les coefficients complexes du filtre $H(b_2)$ associé à la sous-bande $b_2$ peuvent être déduits des coefficients du filtre $H(b_1)$ associé à la sous-bande $b_1$ par multiplication par une exponentielle complexe à l'aide de la relation suivante : $h_l(b_2) = h_l(b_1).\exp(-j2\pi\frac{F_{b2}-F_{b1}}{F_e}(l-\frac{L}{2}))$, avec $F_{b1}$, $F_{b2}$ les fréquences centrales des sous-bandes $b_1$, $b_2$.

Comme représenté à la figure 2, le gabarit choisi peut consister en une fenêtre fréquentielle. Il peut également prendre la forme de toute fonction adaptée à cet effet. Les gabarits choisis pour chaque sous-bande doivent recouvrir ensemble toute la bande utile de fréquence du signal afin de ne pas ignorer des zones de fréquence dans lesquelles une source interférente pourrait être localisée. Les gabarits choisis ne doivent pas se chevaucher pour éviter qu'une source interférente ne soit localisée fréquentiellement dans deux bandes adjacentes, ce qui augmenterait artificiellement le nombre total d'interférences et donc la difficulté à déterminer les directions d'arrivée des sources. La largeur minimale d'une sous-bande est égale à $F_e/L$ et donc le nombre maximum de sous-bandes est égal au nombre de retards L.

Le nombre de sous-bandes est un paramètre du procédé selon l'invention. Il peut être choisi définitivement ou évoluer, de façon dynamique, au cours de l'application du procédé comme cela sera explicité plus en détail par la suite.

Le choix du nombre de sous-bandes résulte d'un compromis entre complexité des traitements mis en oeuvre et degré de fiabilité des résultats obtenus. Le procédé peut également fonctionner avec une unique sous-bande, ce qui présente l'avantage de diminuer la complexité des calculs, une seule matrice spatiale étant calculée.

Un nombre élevé de sous-bandes permet une meilleure précision dans la détection du nombre de sources interférentes ainsi qu'une estimation de leurs occupations spectrales. En particulier, si le spectre fréquentiel des sources interférentes est étroit, un découpage en plusieurs sous-bandes permet d'isoler chaque source interférente dans une sous-bande et ainsi d'améliorer les résultats du procédé. Au contraire, si plusieurs sources interfèrent dans la même sous-bande, ce qui est d'autant plus probable que le nombre de sous-bandes est faible, la discrimination des directions d'arrivée de chaque source est moins précise.

La détermination et la localisation angulaire des sources interférentes est ensuite effectuée dans chaque sous-bande prédéterminée.

Détermination du nombre de sources interférentes

Dans un premier temps, le nombre de sources interférentes dans chaque sous-bande est déterminé à partir de l'application du critère AIC (Akaike Information Criterion) à la matrice R(b). Cette étape du procédé selon l'invention est à présent décrite pour application à une matrice R, étant entendu que cette étape doit être itérée pour chaque matrice R(b) associée à chaque sous-bande prédéfinie.

Pour cela, les valeurs propres de la matrice R doivent être déterminées dans l'ordre décroissant. Soient $\{\lambda_1, \lambda_2,... \lambda_M\}$ les valeurs propres de la matrice R triées dans l'ordre décroissant. Si le critère suivant n'est pas respecté :

$$\log((\sum_{m=1}^{M} \lambda_m) / M) - \log(\prod_{m=1}^{M} \lambda_m) / M > seuil \qquad (2)$$

alors le procédé aboutit à la conclusion qu'aucune source interférente n'est détectée dans la sous-bande b. En effet, lorsqu'aucune interférence n'impacte le signal reçu, toutes les valeurs propres de la matrice d'intercorrélation sont sensiblement identiques, car elles sont représentatives de la puissance du bruit thermique. Dans un tel cas, les deux quantités logarithmiques de la relation (2) sont sensiblement égales. Cependant, il est raisonnable de tenir compte des erreurs d'estimation de la matrice R, qui peuvent induire, une dispersion sur les valeurs propres mesurées, même si aucune source interférente n'existe. C'est pourquoi, la différence des deux quantités logarithmiques est comparée à un seuil de tolérance qui dépend du nombre d'échantillons de signal utilisés pour le calcul de la matrice R. En pratique un seuil égal à log(1.2) permet de tolérer une erreur de 20% sur le ratio $(\Sigma\lambda_m/M) (\Pi\lambda_m)^{1/M}$ comparé à 1.

Si le critère (2) est respecté, cela signifie qu'au moins la valeur propre $\lambda_1$ est associée à une source interférente dans la sous-bande b. Le procédé doit alors être réitéré pour la valeur propre suivante dans l'ordre décroissant. Pour la valeur propre $\lambda_2$ de rang 2, le critère à calculer, de façon similaire à la relation (2) est :

$$\log((\sum_{m=2}^{M} \lambda_m) / (M-1)) - \log(\prod_{m=2}^{M} \lambda_m) / (M-1) > seuil \qquad (3)$$

Si le critère (3) n'est pas respecté, le procédé conclue à la présence d'une seule source interférente associée à la valeur propre $\lambda_1$. Dans le cas contraire, une seconde source interférente associée à la valeur propre $\lambda_2$ est détectée, et le processus est réitéré pour les autres valeurs propres jusqu'à trouver une valeur propre $\lambda_k$ qui ne vérifie pas le critère ou jusqu'à la dernière valeur propre :

$$\log((\sum_{m=k}^{M} \lambda_m) / (M-k+1)) - \log(\prod_{m=k}^{M} \lambda_m) / (M-k+1) < seuil$$

avec k compris entre 1 et M

A l'issu de cette étape, le nombre de sources interférentes détectées dans la sous-bande b est égal à k-1, les valeurs propres $\{\lambda_1, \lambda_2, ..., \lambda_{k-1}\}$ vérifiant toutes le critère de détection d'une source interférente.

La détermination directe de l'ensemble des valeurs propres d'une matrice de dimensions (M,M) est une opération couteuse à implémenter. Pour optimiser l'exécution du procédé selon l'invention, il est souhaitable de procéder de la façon suivante.

Dans un premier temps, le polynôme caractéristique P(X) de la matrice R est calculé. Ce polynôme est de degré M :

$$P(X) = D\acute{e}terminant(\,R - X\,.\,Id\,)$$

$$P(X) = a_0 + a_1.X + a_2.X^2 + \ldots + a_{M-1}.X^{M-1} + a_M.X^M$$

$$P(X) = (\lambda_1 - X)\,.\,(\lambda_2 - X)\,\ldots..\,(\lambda_M - X)$$

Les valeurs des coefficients $a_M$, $a_{M-1}$ et $a_o$ sont données par les relations suivantes :

$a_M = (-1)^M$, $a_{M-1} = (-1)^{M-1}.\text{Trace}(R)$ et $a_o = \text{Déterminant}(R)$.

Le reste des coefficients peut être obtenu par résolution du système d'équations suivant :

$$P(m)\ = a_0 + m.a_1 + m^2.a_2 + \ldots + m^{(M-1)}.a_{M-1} + m^M.a_M\ = D\acute{e}terminant(\,R + \,m.Id\,)$$
$$\vdots$$
$$P(2)\ = a_0 + 2.a_1 +\ \ 4.a_2 + \ldots + 2^{(M-1)}.a_{M-1} +\ 2^M.a_M\ \ = D\acute{e}terminant(\,R - 2.Id\,)$$
$$P(1)\ = a_0 +\ \ a_1 +\ \ \ \ a_2 + \ldots +\ \ \ \ \ \ \ a_{M-1} +\ \ \ \ \ a_M\ = D\acute{e}terminant(\,R -\ \ \ Id\,)$$
$$P(0)\ = a_0\ \ \ \ \ \ \ \ \ \ \ \ \ \ \ \ \ \ \ \ \ \ \ \ \ \ \ \ \ \ \ \ \ \ \ \ \ = D\acute{e}terminant(\,R\,)$$
$$P(-1) = a_0 -\ \ a_1 +\ \ \ \ a_2 - \ldots +\ \ \ \ \ \ \ a_{M-1} -\ \ \ \ \ a_M = D\acute{e}terminant(\,R +\ \ \ Id\,)$$
$$P(-2) = a_0 - 2.a_1 +\ \ 4.a_2 - \ldots + 2^{(M-1)}.a_{M-1} - 2^M.a_M = D\acute{e}terminant(\,R + 2.Id\,)$$
$$\vdots$$
$$P(-m) = a_0 - m.a_1 +\ m^2.a_2 - \ldots + m^{(M-1)}.a_{M-1} - m^M.a_M = D\acute{e}terminant(\,R + \,m.Id\,)$$

De plus le calcul du critère (2) peut être réalisé à partir des valeurs des coefficients $a_o$ et $a_{M-1}$ directement puisque $a_o$ est égal au déterminant de la matrice R lui-même égal au produit des valeurs propres et $a_{M-1}$ est égal, en valeur absolue, à la trace de la matrice R encore égale à la somme des valeurs propres qui sont toutes positives.

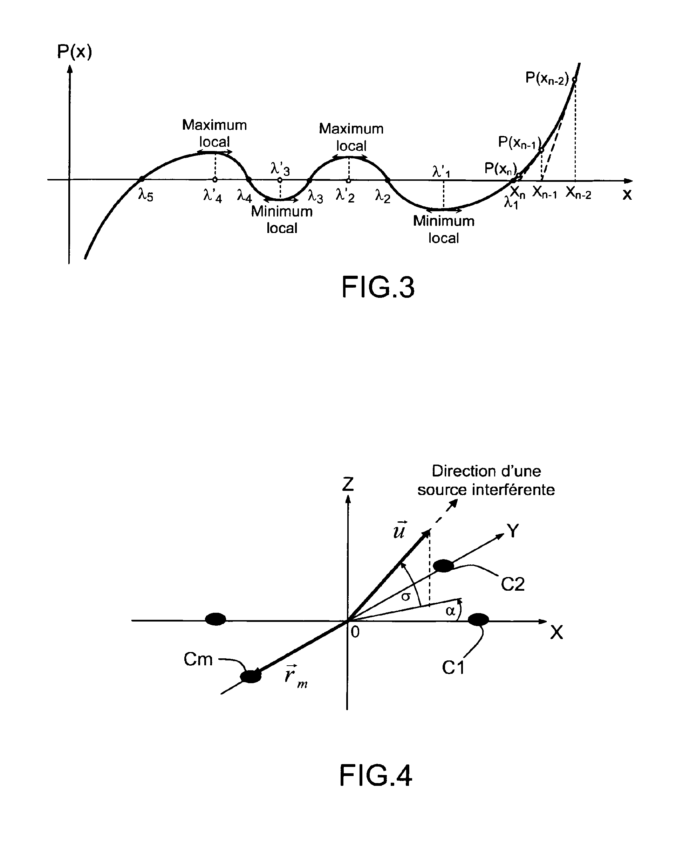

Les racines du polynôme caractéristique P(X) sont les valeurs propres de la matrice R. La valeur propre $\lambda_1$ la plus élevée dans l'ordre décroissant peut être déterminée par application de la méthode de Newton itérative qui est illustrée à la figure 3.

On définit la relation récurrente suivante : $x_{n+1} = P(x_n) / P'(x_n)$ avec P' le polynôme dérivé du polynôme P. Cette suite converge vers la valeur propre $\lambda_1$ si la valeur initiale $x_0$ de la suite est supérieure à $\lambda_1$. Pour s'en assurer, $x_0$ peut être fixé égal à la trace de la matrice R :

$$x_0 = \overline{Trace}(\,R\,) = (-1)^{M-1}.a_{M-1} = \mid a_{M-1} \mid$$

Ce calcul itératif est arrêté lorsque $|x_{n+1} - x_n|$ est inférieur à un seuil prédéterminé par exemple égal à un millionième de la valeur de la trace de la matrice R.

Pour calculer la seconde valeur propre $\lambda_2$ par ordre décroissant, il suffit d'effectuer la division polynomiale de P(X) par $(\lambda_1 - X)$ afin d'obtenir un nouveau polynôme Q(X) dont les racines sont les valeurs propres $\{\lambda_2, \ldots \lambda_M\}$ et de lui appliquer la méthode de Newton précitée.

En outre, pour calculer le critère AIC appliqué à la seconde valeur propre, conformément à la relation (2), le calcul du produit des valeurs propres peut être obtenu directement par la valeur du coefficient $b_0$ de plus faible degré ou premier coefficient du polynôme Q(X) et la somme des valeurs propres peut être obtenue directement par la valeur absolue du coefficient $b_{M-2}$ de degré M-2 ou avant dernier coefficient du polynôme Q(X).

Ainsi, il n'est pas forcément nécessaire de déterminer l'ensemble des valeurs propres de la matrice R d'emblée. Le critère AIC est testé pour chaque valeur propre déterminée dans l'ordre décroissant jusqu'à trouver une valeur propre $\lambda_k$ qui ne respecte pas ce critère. Il n'est donc pas nécessaire de calculer les valeurs propres suivantes $\lambda_k, .., \lambda_M$ dans ce cas. Le nombre de sources d'interférence détectées sera alors N = k-1.

Découpage adaptatif en sous-bandes

Comme mentionné précédemment, le nombre de sous-bandes fréquentielles peut être prédéfini avant la mise en oeuvre du procédé de façon statique. Il peut également être déterminé de façon dynamique par dichotomie, en fonction des sources interférentes détectées.

A cet effet, le nombre de sous-bandes est initialisé à une seule sous-bande couvrant la totalité du domaine fréquentiel échantillonné $[-F_e/2 ; F_e/2]$. Le critère défini par la relation (2) est appliqué à cette unique sous-bande. Si ce critère est respecté, c'est-à-dire qu'il n'y a pas dépassement du seuil de détection, on considère qu'il n'y a pas d'interférences dans la bande utile du signal et le procédé est arrêté.

Dans le cas contraire, lorsqu'il y a dépassement du seuil de détection, cela signifie qu'au moins une source interférente est présente dans la bande utile du signal, la bande $[-F_e/2 ; F_e/2]$ est alors découpée en une pluralité de sous-bandes, par exemple deux sous-bandes, de largeurs identiques. Le critère (2) est appliqué à chaque sous-bande et le processus est réitéré pour chaque sous-bande dans laquelle une interférence est détectée. Le découpage en sous-bandes est interrompu lorsque la largeur fréquentielle de la sous-bande la plus étroite est suffisamment fine pour obtenir une localisation fréquentielle précise de la source interférente ou au plus tard lorsque la largeur de la sous-bande la plus étroite est inférieure ou égale à $F_e/L$.

Détermination des directions d'arrivée des sources interférentes

Une fois déterminé le nombre N de sources interférentes ainsi que les valeurs propres associées pour chaque sous-bande, le procédé selon l'invention consiste à calculer, pour chaque valeur propre $\lambda_i$ retenue, les vecteurs propres correspondants. A cet effet, une méthode possible consiste à résoudre le système d'équations suivant :

$$\{ R(b) - \lambda_i\, Id \}\,.\, \boldsymbol{X} = 0$$

avec

$$R(b) = \begin{bmatrix} r_{1,1} & .. & r_{1,m} & .. & r_{1,M} \\ \vdots & & \vdots & & \vdots \\ r_{m,1} & .. & r_{m,m} & .. & r_{m,M} \\ \vdots & & \vdots & & \vdots \\ r_{M,1} & .. & r_{M,m} & .. & r_{M,M} \end{bmatrix}_{M\,xM} \qquad X = \begin{bmatrix} x_1 \\ x_2 \\ \vdots \\ x_{M-1} \\ x_M \end{bmatrix}_{M\,x1} \quad ,$$

Id est la matrice identité dans l'espace $C^M$ des matrices complexes de dimensions (M,M)

En supposant la dernière composante du vecteur propre non nulle et égale à 1, et en ignorant la dernière ligne, on obtient un système réduit à M-1 équations et M-1 inconnues qui peut être résolu par la méthode du pivot de Gauss au prix d'un nombre d'opérations complexes de l'ordre de $(M-1)^3$. La résolution peut également être effectuée par le biais d'une décomposition de Cholesky, la matrice $R(b) - \lambda_i.Id$ réduite, c'est-à-dire sans la dernière ligne ni la dernière colonne étant symétrique. Dans ce cas le nombre d'opérations complexes est divisé par deux. Dans le cas où la dernière composante du vecteur propre est nulle, on fixe à zéro une autre composante. Une fois que la solution est trouvée, elle est normalisée pour obtenir le vecteur propre $U_i$ associé à la valeur propre $\lambda_i$. Toute méthode connue permettant de calculer les vecteurs propres d'une matrice est équivalente.

L'ensemble des vecteurs propres normalisés $(\boldsymbol{U_1},...,\boldsymbol{U_N})$ de la matrice R(b) correspondant aux N valeurs propres associées aux sources interférentes détectées constitue une base orthogonale du sous-espace des interférences de l'espace vectoriel C$^M$, où C est l'ensemble des nombres complexes. La matrice de projection dans ce sous-espace est définie par la relation suivante :

$$P_{interférences} = [\; U_1 \; ... \; U_N \;] \; . \; [\; U_1 \; ... \; U_N \;]^{T^*},$$

où $^{T^*}$ est l'opérateur transposé conjugué.

Le sous-espace du bruit est orthogonal et complémentaire au sous-espace des interférences. Sa matrice de projection est donc égale à:

$$P_{bruit} = I_d - P_{interférences},$$

où $I_d$ est la matrice identité dans l'espace C$^M$.

Un objectif de l'invention est de déterminer la direction d'arrivée d'une onde interférente afin de localiser sa source.

La figure 4 représente la direction d'arrivée d'une onde interférente, matérialisée par son vecteur directeur $\vec{u}(\sigma,\alpha)$ exprimé dans un repère capteurs fixe par rapport aux directions de pointage d'au moins deux capteurs du réseau que comporte le récepteur. Sur la figure 4, les capteurs C1 et C2 définissent les directions X et Y du repère, la direction Z étant orthogonale au plan (X,Y). L'angle $\alpha$ entre la direction de pointage du premier capteur C1 et la direction d'arrivée de l'onde interférente projetée sur le plan (X,Y) est l'angle d'azimut. L'angle $\sigma$ entre le plan (X,Y) et la direction d'arrivée de l'onde interférente est l'angle de site.

Le vecteur des gains relatifs d'antennes sur les capteurs C$_1$,..., C$_m$,..C$_M$ du réseau d'antennes dans la direction spatiale ($\sigma,\alpha$) est défini par :

$$\vec{G}(\sigma,\alpha) = \begin{bmatrix} g_1 \\ \vdots \\ g_m \\ \vdots \\ g_M \end{bmatrix}_{M\,x1} \qquad g_m = \exp(\, 2j\pi \, . \, \vec{u}(\sigma,\alpha) \, . \, \vec{r}_{capteurs\;m} \, / \, \lambda \, ) \; + \; \beta_{0\,capteur\,m}(\sigma,\alpha)$$

$$\vec{u}(\sigma,\alpha) = \begin{bmatrix} \cos(\sigma).\cos(\alpha) \\ \cos(\sigma).\sin(\alpha) \\ \sin(\sigma) \end{bmatrix}_{3x1}$$ est le vecteur directeur dans la direction spatiale ($\sigma,\alpha$), exprimée en repère capteur (X,Y,Z) $\vec{r}_{capteurs\;m} = \begin{bmatrix} X_{capteur\;m} \\ Y_{capteur\;m} \\ Z_{capteur\;m} \end{bmatrix}_{3x1}$ est le vecteur position du capteur C$_m$, exprimé en repère capteur (X,Y,Z)

$\beta_{0capteur\,m}(\sigma,\alpha)$ est le gain complexe,avec une amplitude et une phase, du capteur C$_m$, pris isolément, dans la direction spatiale ($\sigma,\alpha$), donné par une connaissance a priori du diagramme de rayonnement du capteur C$_m$.

Par ailleurs, le sous-espace des interférences est également généré par les vecteurs de gains relatifs $\vec{G}(\sigma_i, \alpha_i)$ associés aux directions spatiales ($\alpha_i,\sigma_i$) des sources d'interférences détectées, l'indice i variant de 1 à N.

L'étape suivante du procédé selon l'invention consiste à déterminer tous les vecteurs de gains relatifs $\vec{G}(\sigma,\alpha)$ appartenant au sous-espace des interférences et qui correspondent donc à une direction ($\alpha_i,\sigma_i$) d'une source d'interférences.

Pour vérifier l'appartenance d'un vecteur de gains relatifs au sous-espace des interférences, il suffit de projeter ce vecteur dans le sous-espace de bruit, orthogonal et complémentaire. Si le résultat est le vecteur nul alors le vecteur appartient bien au sous-espace des interférences.

Cela se traduit par la relation suivante :

$$P_{bruit} . \vec{G}(\sigma, \alpha) = \vec{0} \qquad (4)$$

qui est vérifiée pour toute direction spatiale $(\alpha_i, \sigma_i)$ correspondant à une source interférente.

La relation (4) peut être résolue pratiquement en recherchant les valeurs de $(\alpha, \sigma)$ qui annulent le module du vecteur projeté : $\Phi(\sigma,\alpha) = \| P_{bruit} . \vec{G}(\sigma,\alpha) \|^2$. $\Phi(\sigma, \alpha) = \vec{G}(\sigma \ \alpha)^{T*} . P_{bruit}^{T*} . P_{bruit} . \vec{G}(\sigma, \alpha) = \vec{G}(\sigma, \alpha)^{T*} . P_{bruit} \vec{G}(\sigma,\alpha)$, $P_{bruit}^2 = P_{bruit}$ car $P_{bruit}$ est une matrice de projection.

Pour déterminer les valeurs qui annulent la fonction $\Phi(\sigma,\alpha)$, il peut être avantageux de procéder de manière itérative en utilisant, par exemple, la méthode de Newton bidimensionnelle consistant à calculer la relation suivante jusqu'à convergence vers un couple de valeurs stables de $(\alpha, \sigma)$ :

$$\begin{bmatrix} \sigma_{n+1} \\ \alpha_{n+1} \end{bmatrix} = \begin{bmatrix} \sigma_n \\ \alpha_n \end{bmatrix} - \Phi(\sigma_n, \alpha_n) . \frac{\vec{grad}\Phi(\sigma_n, \alpha_n)}{\| \vec{grad}\Phi(\sigma_n, \alpha_n) \|^2} \ , \ \text{avec} \ \vec{grad}\Phi(\sigma,\alpha) = \begin{bmatrix} \frac{\partial \Phi}{\partial \sigma}(\sigma, \alpha) \\ \frac{\partial \Phi}{\partial \alpha}(\sigma, \alpha) \end{bmatrix}$$

Pour chaque source d'interférence à rechercher, la relation précitée doit être initialisée avec une direction de recherche $(\alpha,\sigma)$ différente, par exemple prise égale à un des 3 axes du repère (X,Y,Z) lorsque le nombre de sources détectées est égal à 3.

Le calcul est arrêté lorsque $|\Phi(\sigma_{n+1},\alpha_{n+1})-\Phi(\sigma_n,\alpha_n)|$ est inférieur à un seuil de convergence prédéfini.

Le calcul du gradient de la fonction $\Phi(\sigma,\alpha)$ peut être obtenu à l'aide des relations suivantes :

$$\frac{\partial \Phi}{\partial \sigma}(\sigma, \alpha) = 2 . \vec{G}(\sigma, \alpha)^{T*} . P_{bruit} . \frac{\partial \vec{G}}{\partial \sigma}(\sigma, \alpha)$$

$$\frac{\partial \Phi}{\partial \alpha}(\sigma, \alpha) = 2 . \vec{G}(\sigma, \alpha)^{T*} . P_{bruit} . \frac{\partial \vec{G}}{\partial \alpha}(\sigma, \alpha)$$

$$\frac{\partial g_m}{\partial \sigma}(\sigma, \alpha) = (2j\pi . \frac{\partial \vec{u}}{\partial \sigma}(\sigma, \alpha) . \vec{r}_{capteurs \ m} / \lambda) . \exp(2j\pi . \vec{u}(\sigma, \alpha) . \vec{r}_{capteurs \ m} / \lambda)$$
$$+ \frac{\partial \beta_{0 \ capteur \ m}}{\partial \sigma}(\sigma, \alpha)$$

$$\frac{\partial g_m}{\partial \alpha}(\sigma, \alpha) = (2j\pi . \frac{\partial \vec{u}}{\partial \alpha}(\sigma, \alpha) . \vec{r}_{capteurs \ m} / \lambda) . \exp(2j\pi . \vec{u}(\sigma, \alpha) . \vec{r}_{capteurs \ m} / \lambda)$$
$$+ \frac{\partial \beta_{0 \ capteur \ m}}{\partial \alpha}(\sigma, \alpha)$$

$$\frac{\partial \vec{u}}{\partial \sigma}(\sigma, \alpha) = \begin{bmatrix} -\sin(\sigma).\cos(\alpha) \\ -\sin(\sigma).\sin(\alpha) \\ \cos(\sigma) \end{bmatrix}$$

$$\frac{\partial \vec{u}}{\partial \alpha}(\sigma, \alpha) = \begin{bmatrix} -\cos(\sigma).\sin(\alpha) \\ \cos(\sigma).\cos(\alpha) \\ 0 \end{bmatrix}$$

Le gradient peut aussi être approximé par application d'une méthode par différence finie consistant à estimer la valeur du gradient en utilisant deux points proches $(\alpha, \sigma)$ et $(\alpha + d\alpha, \sigma + d\sigma)$.

$$\vec{grad}\Phi(\sigma, \alpha) = \begin{bmatrix} [\Phi(\sigma + d\sigma, \alpha) - \Phi(\sigma, \alpha)]/d\sigma \\ [\Phi(\sigma, \alpha + d\alpha) - \Phi(\sigma, \alpha)]/d\alpha \end{bmatrix}$$

Pour améliorer la précision des résultats obtenus, il est possible d'exprimer la direction d'arrivée de l'onde interférente non plus dans un repère lié au capteur mais dans un repère lié à la Terre. Ce changement de repère peut être obtenu à l'aide d'une mesure d'attitude, par exemple inertielle. Les directions d'arrivée calculées dans un repère terrestre fixe peuvent ensuite être filtrées ou moyennées pour affiner la précision des mesures en éliminant le bruit sans être contraint par les mouvements du porteur du dispositif lorsque celui-ci est mobile.

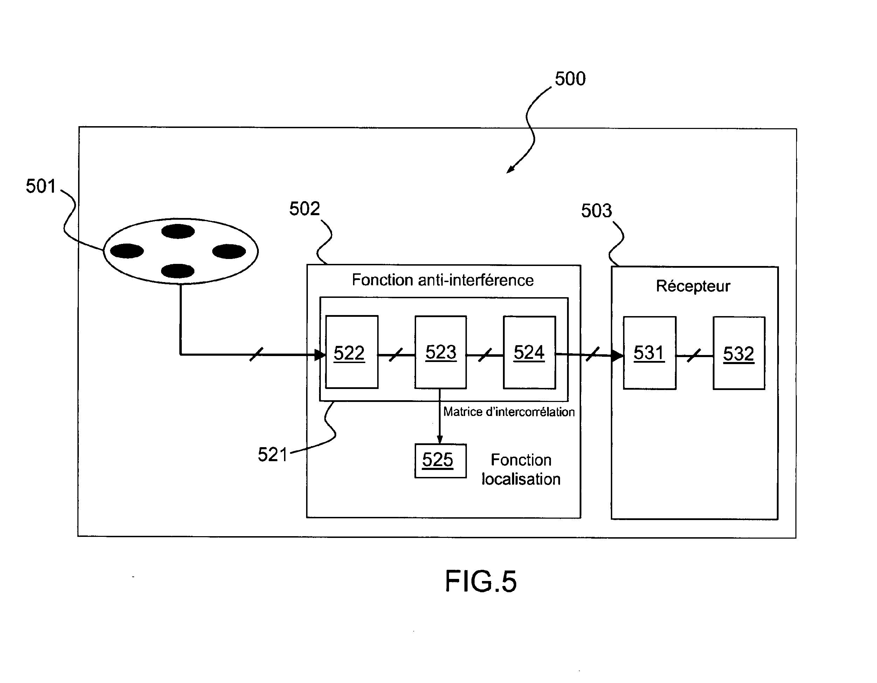

La figure 5 représente, sur un schéma, un exemple d'un récepteur adapté à mettre en oeuvre le procédé selon l'invention.

Le récepteur 500 peut être par exemple un récepteur de communication ou un récepteur de radio-navigation. Il comporte un réseau d'antennes ou de capteurs 501 destiné à recevoir un signal, un module de traitement d'antennes 502 et un module de réception de signaux 503. Le module de traitement d'antennes 502 comporte au moins un module de traitement anti-interférence 521 adapté à réaliser une fonction de traitement de signal spatial SAP ou spatio-temporel STAP pour éliminer l'impact des interférences dans le signal reçu avant que celui-ci ne soit transmis au module de réception 503. Le module de traitement anti-interférence 521 comporte au moins une première carte 522 de transposition en fréquence basse et numérisation, une deuxième carte numérique 523 réalisant la fonction de traitement de signal adaptée à supprimer l'influence des interférences et une troisième carte 524 de transposition en fréquence haute. Le module de réception 503 comporte lui-même une première carte 531 de transposition en fréquence basse et numérisation et une seconde carte numérique 532 adaptée à exécuter une fonction de traitement de signal sur le signal reçu, par exemple une fonction de démodulation du signal ou une fonction de traitement d'un signal de radio-navigation apte à déterminer la position du récepteur 500. Le module de traitement anti-interférence 521 comporte en outre un module 525 de localisation de sources interférentes exécutant le procédé selon l'invention. Ce module 525 reçoit, de la carte de traitement numérique 523, la matrice d'intercorrélation spatio-temporelle $R_{xx}$ des signaux reçus sur le réseau d'antennes 501 et est paramétré par des moyens externes lui fournissant des informations sur la géométrie et les caractéristiques du réseau d'antennes, notamment les diagrammes en gain et phase des antennes, ainsi que les plages de recherche spatiales et/ou fréquentielles et éventuellement le nombre de sources interférentes à localiser. Le module de localisation d'interférences 525 délivre en sortie les directions d'arrivée, en azimut et site, des ondes interférentes ainsi que leur occupation fréquentielle et leur nombre.

Dans le cas où le récepteur 500 ne comporte pas de module de traitement anti-interférence 521, la matrice d'intercorrélation spatio-temporelle $R_{xx}$ est directement calculée par le module de localisation d'interférences 525 selon l'invention.

## Revendications

1. Procédé de localisation de sources interférant sur un signal reçu par un récepteur (500) comportant un réseau d'antennes (501) ledit procédé comprenant:

• une étape de calcul de la matrice d'intercorrélation spatio-temporelle $R_{xx}$ des signaux reçus par les antennes élémentaires dudit réseau (501),
• une étape de subdivision de la bande utile desdits signaux en sous-bandes (b) et de génération d'un filtre H(b) passe-bande associé à chaque sous-bande (b),

ledit procédé étant **caractérisé en ce qu'**il comprend en outre les étapes suivantes :

• pour chaque sous-bande (b),

- une étape de calcul de la matrice d'intercorrélation spatiale R(b) associée à la sous-bande (b) par application dudit filtre H(b) à la matrice d'intercorrélation spatio-temporelle $R_{xx}$,
- une étape de calcul d'au moins une valeur propre $\{\lambda_1, \lambda_2,... \lambda_M\}$ de ladite matrice d'intercorrélation spatiale R(b),
- une étape de détection d'interférences, une source interférente étant détectée lorsqu'une valeur propre $\lambda_k$, vérifie le critère de détection suivant : $\log((\sum_{m=k}^{M} \lambda_m)/(M-k+1)) - \log(\prod_{m=k}^{M} \lambda_m)/(M-k+1) > seuil$,

où M est le nombre d'antennes dudit réseau (501), k est l'indice, variant de 1 à M, des valeurs propres dans l'ordre décroissant et *seuil* est un seuil de détection prédéterminé strictement positif,
- une étape de détermination de l'ensemble des vecteurs propres $\{U_1, U_2,... U_N\}$ correspondant aux valeurs propres $\{\lambda_1, \lambda_2,... \lambda_N\}$ associées à une source interférente détectée, ledit ensemble constituant une base du sous-espace des interférences,
- une étape de détermination des directions d'arrivée des sources interférentes par recherche des vecteurs de gains relatifs appartenant audit sous-espace des interférences ou qui sont orthogonaux au sous-espace du bruit orthogonal et complémentaire au sous-espace des interférences.

2. Procédé selon la revendication 1 **caractérisé en ce que** l'étape de subdivision de la bande utile est réalisée par dichotomie, une sous-bande étant subdivisée si au moins une source interférente est détectée dans cette sous-bande.

3. Procédé selon l'une des revendications précédentes **caractérisé en ce que** la matrice d'intercorrélation spatio-temporelle $R_{xx}$ est calculée par blocs à partir des matrices d'intercorrélation spatiales $R_l$ du signal multi-capteurs reçu avec le signal multi-capteurs reçu et retardé d'un nombre d'échantillons égal à I-1.

4. Procédé selon l'une des revendications 1 ou 2 **caractérisé en ce que** la matrice d'intercorrélation spatio-temporelle $R_{xx}$ est calculée à l'aide d'un réseau systolique.

5. Procédé selon l'une des revendications précédentes **caractérisé en ce que** lesdits filtres H(b) sont générés à partir de gabarits fréquentiels qui ne présentent pas de recouvrement entre eux et de sorte que l'ensemble des gabarits occupe toute la bande utile du signal.

6. Procédé selon l'une des revendications précédentes **caractérisé en ce que** les valeurs propres $\{\lambda_1, \lambda_2,... \lambda_N\}$ sont calculées à partir des coefficients du polynôme caractéristique P(X) de la matrice d'intercorrélation spatiale R(b) et de ses divisions polynômiales successives par $(X- \lambda_k)$.

7. Procédé selon la revendication 6 **caractérisé en ce que** lesdites valeurs propres sont calculées par application de la méthode de Newton itérative auxdits polynôme et divisions polynômiales.

8. Procédé selon l'une des revendications 6 ou 7 **caractérisé en ce que** ledit critère de détection est calculé à partir du premier et de l'avant-dernier coefficient desdits polynôme et divisions polynômiales.

9. Procédé selon l'une des revendications précédentes **caractérisé en ce que** les vecteurs propres sont calculés par la méthode du pivot de Gauss ou par une décomposition de Cholesky.

10. Procédé selon l'une des revendications précédentes **caractérisé en ce que** le sous-ensemble des interférences est défini par sa matrice de projection $P_{interférences}$ = *[U$_1$ ... U$_k$]. [U$_1$ ... U$_k$]$^{T*}$*, le sous-ensemble du bruit est défini par sa matrice de projection $P_{bruit}$ égale à la différence entre la matrice identité et la matrice de projection du sous-ensemble des interférences et l'étape de détermination des directions d'arrivée des sources interférentes est réalisée par résolution de l'équation $P_{bruit} \cdot \vec{G}(\sigma, \alpha) = \vec{0}$ où $\vec{G}(\sigma, \alpha)$ est le vecteur des gains relatifs du réseau d'antenne (501) dans la direction définie par l'angle $\sigma$ de site et l'angle $\alpha$ d'azimut.

11. Procédé selon la revendication 10 **caractérisé en ce que** la résolution de l'équation $P_{bruit} \cdot \vec{G}(\sigma, \alpha) = \vec{0}$ est effectuée par recherche des valeurs de $(\alpha, \sigma)$ qui minimisent la fonction $\Phi(\rho, \alpha) = \|P_{bruit} \cdot \vec{G}(\sigma, \alpha)\|^2$, où $\|\|$ est l'opérateur module.

12. Procédé selon la revendication 11 **caractérisé en ce que** la recherche des minima de la fonction $\Phi(\sigma, \alpha)$ est réalisée par application de la méthode de Newton bidimensionnelle.

13. Récepteur (500) comportant au moins un réseau d'antennes (501) destiné à recevoir un signal **caractérisé en ce qu'**il comporte des moyens (525) adaptés à mettre en oeuvre le procédé de localisation de sources interférentes selon l'une des revendications 1 à 12.

14. Récepteur (500) selon la revendication 13 **caractérisé en ce qu'**il comporte en outre un module de traitement anti-interférences (521) adapté à supprimer les interférences impactant ledit signal et à calculer ladite matrice d'inter-corrélation spatio-temporelle $R_{xx}$.

15. Récepteur (500) selon l'une des revendications 13 ou 14 **caractérisé en ce que** ledit signal est un signal de radio-navigation ou un signal de télécommunication.

**Patentansprüche**

1. Verfahren zum Lokalisierung von Quellen, die mit einem Signal interferieren, das von einem Empfänger (500) empfangen wird, der eine Antennengruppe (501) umfasst, wobei das Verfahren Folgendes beinhaltet:

   • einen Schritt des Berechnens der räumlich-zeitlichen Interkorrelationsmatrix $R_{xx}$ von Signalen, die von den elementaren Antennen der Gruppe (501) empfangen werden;
   • einen Schritt des Unterteilens des Nutzbandes der Signale in Subbänder (b) und des Erzeugens eines mit jedem Subband (b) assoziierten Bandpassfilters H(b),

   wobei das Verfahren **dadurch gekennzeichnet ist, dass** es ferner die folgenden Schritte beinhaltet:

   • für jedes Subband (b):

   - einen Schritt des Berechnens der mit dem Subband (b) assoziierten räumlichen Interkorrelationsmatrix R(b) durch Anwenden des Filters H(b) auf die räumlich-zeitliche Interkorrelationsmatrix $R_{xx}$;
   - einen Schritt des Berechnens von wenigstens einem Eigenwert $\{\lambda_1, \lambda_2, ... \lambda_M\}$ der räumlichen Interkorrelationsmatrix R(b);
   - einen Schritt des Erkennens von Interferenzen, wobei eine Interferenzquelle erkannt wird, wenn ein Eigenwert $\lambda_k$ das folgende Erkennungskriterium erfüllt:

   $$\log\left(\left(\sum_{m=k}^{M} \lambda_m\right)/(M-k+1)\right) - \log\left(\prod_{m=k}^{M} \lambda_m\right)/(M-k+1) > Schwelle$$

   , wobei M die Zahl der Antennen der Gruppe (501) ist, k der von 1 bis M variierende Index der Eigenwerte in absteigender Folge und *Schwelle* ein strikt positiver vorbestimmter Erkennungsschwellenwert ist;
   - einen Schritt des Ermittelns des Satzes von Eigenwelien $\{U_1, U_2 .... U_N\}$, die den mit einer erkannten Interferenzquelle assoziierte Eigenwerten $\{\lambda_1, \lambda_2, .. \lambda_N\}$ entsprechen, wobei der Satz eine Basis des Subraums der Interferenzen bildet;
   - einen Schritt des Ermittelns von Ankunftsrichtungen der Inteiferenzquellen durch Suchen nach Vektoren von relativen Verstärkungen, die zum Subraum der Interferenzen gehören oder die orthogonal zum Subraum des oithogonalen Rauschens und komplementär zum Subraum der Inteiferenzen sind.

2. Verfahren nach Anspruch 1, **dadurch gekennzeichnet, dass** der Schritt des Unterteilens des Nutzbandes durch Dichotomie durchgeführt wird, wobei ein Subband unterteilt wird, wenn wenigstens eine Inteiferenzquelle in diesem Subband erkannt wird.

3. Verfahren nach einem der vorherigen Ansprüche, **dadurch gekennzeichnet, dass** die räumlich-zeitliche Interkorrelationsmatrix $R_{xx}$ blockweise auf der Basis der räumlichen Interkorrelationsmatrizen $R_I$ des empfangenen Multisensor-Signals mit dem empfangenen und verzögerten Multisensor-Signal aus einer Anzahl von I-1 Samples berechnet wird.

4. Verfahren nach Anspruch 1 oder 2, **dadurch gekennzeichnet, dass** die räumlich-zeitliche Interkorrelationsmatrix $R_{xx}$ mit einer systolischen Gruppe berechnet wird.

5. Verfahren nach einem der vorheiigen Ansprüche, **dadurch gekennzeichnet, dass** die Filter H(b) auf der Basis von nicht überlappenden Frequenzgängen und so erzeugt werden, dass alle Gänge das gesamte Nutzband des Signals belegen.

6. Verfahren nach einem der vorherigen Ansprüche, **dadurch gekennzeichnet, dass** die Eigenwerte $\{\lambda_1, \lambda_2,...\lambda_N\}$ auf der Basis von Koeffizienten des charakteristischen Polynoms P(X) der räumlichen Interkorrelationsmatrix R(b) und ihrer sukzessiven polynomen Divisionen durch $(X-\lambda_k)$ berechnet werden.

7. Verfahren nach Anspruch 6, **dadurch gekennzeichnet, dass** die Eigenwerte durch Anwenden des iterativen Newton-Verfahrens auf das Polynom und auf polynome Divisionen berechnet werden.

8. Verfahren nach Anspruch 6 oder 7, **dadurch gekennzeichnet, dass** das Erkennungskriterium auf der Basis des ersten und vorletzten Koeffizienten des Polynoms und der polynomen Divisionen berechnet wird.

9. Verfahren nach einem der vorherigen Ansprüche, **dadurch gekennzeichnet, dass** die Eigenvektoren durch die Gaußsche Rotationsmethode oder durch eine Cholesky-Zerlegung berechnet werden.

10. Verfahren nach einem der vorherigen Ansprüche, **dadurch gekennzeichnet, dass** die Teilmenge der Interferenzen durch ihre Projektionsmatrix $P_{Interferenzen}= [U_1 ... U_k]. [U_1... U_k]^{T*}$ definiert wird, die Teilmenge des Rauschens durch ihre Projektionsmatrix $P_{Rauschen}$ als gleich der Differenz zwischen der Identitätsmatrix und der Projektionsmatrix der Teilmenge der Interferenzen definiert wird, und der Schritt des Ermittelns der Ankunftsrichtungen der Interferenzquellen durch Auflösen der Gleichung $P_{Rauschen} \vec{G}(\sigma,\alpha) = \vec{0}$ durchgeführt wird, wobei $\vec{G}(\sigma,\alpha)$ der Vektor der relativen Verstärkungen der Antennengruppe (501) in der durch den Zielhöhenwinkel $\rho$ und den Azimutwinkel $\alpha$ definierten Richtung ist.

11. Verfahren nach Anspruch 10, **dadurch gekennzeichnet, dass** das Auflösen der Gleichung $P_{rauschen} \vec{G}(\sigma,\alpha) = \vec{0}$ durch Suchen der Werte von $(\alpha, \sigma)$ durchgeführt wird, die die Funktion $\Phi(\sigma, \alpha) = \|P_{rauschen}.\vec{G}(\sigma,\alpha)\|^2$ minimieren, wobei $\|\|$ der Moduloperator ist.

12. Verfahren nach Anspruch 11, **dadurch gekennzeichnet, dass** die Suche nach den Minima der Funktion $\Phi(\sigma, \alpha)$ durch Anwenden der zweidimensionalen Newton-Methode durchgeführt wird.

13. Empfänger (500), der wenigstens eine Antennengruppe (501) zum Empfangen eines Signals umfasst, **dadurch gekennzeichnet, dass** er Mittel (525) zum Implementieren des Verfahrens zum Lokalisierung von Interferenzquellen nach einem der Ansprüche 1 bis 12 umfasst.

14. Empfänger (500) nach Anspruch 13, **dadurch gekennzeichnet, dass** er ferner ein Anti-Interferenz-Verarbeitungsmodul (521) zum Beseitigen der das Signal beeinflussenden Interferenzen und zum Berechnen der räumlich-zeitlichen Interkorrelationsmatrix $R_{xx}$ umfasst.

15. Empfänger (500) nach Anspruch 13 oder 14, **dadurch gekennzeichnet, dass** das Signal ein Funknavigationssignal oder ein Telekommunikationssignal ist.

**Claims**

1. A method for locating sources interfering with a signal received by a receiver (500) comprising an array of antennae (501), said method comprising:

   • a step of computing the space-time intercorrelation matrix $R_{xx}$ of the signals received by the elementary antennae of said array (501);
   • a step of subdividing the useful band of said signals into sub-bands (b) and of generating a band-pass filter H(b) associated with each sub-band (b),

   said method being **characterised in that** it further comprises the following steps:

   • for each sub-band (b):

   - a step of computing the spatial intercorrelation matrix R(b) associated with the sub-band (b) by applying said filter H(b) to said space-time intercorrelation matrix $R_{xx}$;
   - a step of computing at least one eigenvalue $\{\lambda_1, \lambda_2, ... \lambda_M\}$ of said spatial intercorrelation matrix R(b);
   - a step of detecting interferences, with an interfering source being detected when an eigenvalue $\lambda_k$ meets the following detection criterion: $\log((\sum_{m=k}^{M} \lambda_m)/(M-k+1)) - \log(\prod_{m=k}^{M} \lambda_m)/(M-k+1) > threshold$ where , M is the number of antenna of said array (501), k is the index, varying from 1 to M, of the eigenvalues in descending order and *threshold* is a strictly positive predetermined detection threshold;
   - a step of determining the set of eigenvalues $\{U_1, U_2, ... U_N\}$ corresponding to the eigenvalues $\{\lambda_1, \lambda_2, ... \lambda_N\}$ associated with a detected interfering source, said set forming a basis of the sub-space of the interferences;
   - a step of determining directions of arrival of the interfering sources by searching for vectors of relative gains belonging to said sub-space of the interferences or that are orthogonal to the sub-space of the orthogonal noise and complementary to the sub-space of the interferences.

2. The method according to claim 1, **characterised in that** the step of subdividing the useful band is carried out by dichotomy, with a sub-band being subdivided if at least one interfering source is detected in said sub-band.

3. The method according to any one of the preceding claims, **characterised in that** said space-time intercorrelation matrix $R_{xx}$ is computed by blocks on the basis of the spatial intercorrelation matrices $R_I$ of the multi-sensor signal received with the multi-sensor signal received and delayed by a number of samples that is equal to I-1.

4. The method according to claim 1 or 2, **characterised in that** said space-time intercorrelation matrix $R_{xx}$ is computed using a systolic array.

5. The method according to any one of the preceding claims, **characterised in that** said filters H(b) are generated on the basis of frequency templates that do not overlap each other and in such a way that all of the templates occupy the entire useful band of the signal.

6. The method according to any one of the preceding claims, **characterised in that** said eigenvalues $\{\lambda_1, \lambda_2 .... \lambda_N\}$ are computed on the basis of coefficients of the characteristic polynomial P(X) of said spatial intercorrelation matrix R(b) and of its successive polynomial divisions by $(X-\lambda_k)$.

7. The method according to claim 6, **characterised in that** said eigenvalues are computed by applying the iterative Newton method to said polynomial and polynomial divisions.

8. The method according to claim 6 or 7, **characterised in that** said detection criterion is computed on the basis of the first and the penultimate coefficient of said polynomial and polynomial divisions.

9. The method according to any one of the preceding claims, **characterised in that** said eigenvectors are computed by the Gauss pivot procedure or by a Cholesky decomposition.

10. The method according to any one of the preceding claims, **characterised in that** the sub-set of interferences is defined by its projection matrix $P_{interferences} = [U_1 ... U_k] \cdot [U_1 .. U_k]^{T*}$, the sub-set of the noise is defined by its projection matrix $P_{noise}$ equal to the difference between the identity matrix and the projection matrix of the sub-set of interferences and the step of determining directions of arrival of the interfering sources is carried out by resolving the equation $P_{noise} \vec{G}(\sigma,\alpha) = \vec{0}$ , where $\vec{G}(\sigma,\alpha)$ is the vector of the relative gains of said antenna array (501) in the direction defined by the angle of elevation $\sigma$ and the angle of azimuth $\alpha$.

11. The method according to claim 10, **characterised in that** the resolving of the equation $P_{noise} \vec{G}(\sigma,\alpha)=\vec{0}$ is carried out by searching for values of $(\alpha, \sigma)$ that minimise the function $\Phi(\sigma, \alpha) = \|P_{noise} \cdot \vec{G}(\sigma,\alpha)\|^2$, where $\|\|$ is the modulus operator.

12. The method according to claim 11, **characterised in that** searching for the minima of the function $\Phi(\sigma, \alpha)$ is carried out by applying the two-dimensional Newton procedure.

13. A receiver (500) comprising at least one antenna array (501) designed to receive a signal, **characterised in that** it comprises means (525) designed to implement the method for locating interfering sources according to any one of claims 1 to 12.

14. The receiver (500) according to claim 13, **characterised in that** it further comprises an anti-interference processing module (521) designed to suppress the interferences that affect said signal and to compute said space-time inter-correlation matrix $R_{xx}$.

15. The receiver (500) according to claim 13 or 14, **characterised in that** said signal is a radio-navigation signal or a telecommunication signal.

FIG.1a

104

$S_1(k)$  $S_2(k)$  • • •  $S_M(k)$

$S_1(k-l+1)$ → | $\otimes$ | $\rho_l(1,1)$ |  | $\otimes$ | $\rho_l(1,2)$ |  | $\otimes$ | $\rho_l(1,M)$ |

$S_2(k-l+1)$ → | $\otimes$ | $\rho_l(2,1)$ |  | $\otimes$ | $\rho_l(2,2)$ |  | $\otimes$ | $\rho_l(2,M)$ |

$S_M(k-l+1)$ → | $\otimes$ | $\rho_l(s,1)$ |  | $\otimes$ | $\rho_l(M,2)$ |  | $\otimes$ | $\rho_l(M,M)$ |

## FIG.1b

301
302

bande 1   bande 2   bande 3   bande Nb

-½ Fe          0          ½ Fe

## FIG.2

FIG.3

FIG.4

EP 2 579 063 B1

500

501

502

503

Fonction anti-interférence

Récepteur

| 522 | 523 | 524 |

| 531 | 532 |

Matrice d'intercorrélation

521

525 Fonction localisation

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **EDALATZADEH M R et al.** A new eigenspace sub-band beamformer for cancellation of broadband interferences using Subband Adaptive Filtering. *TELECOMMUNICATIONS, 2008. IST 2008. INTERNATIONAL SYMPOSIUM ON, IEEE, PISCATAWAY, NJ, USA,* 27 Août 2008, ISBN 978-1 -4244-2750-5, 284-289